# EUROPÄISCHE PATENTSCHRIFT

(11) **EP 2 542 932 B1**
(45) Veröffentlichungstag und Bekanntmachung des Hinweises auf die Patenterteilung: **21.03.2018**
(21) Anmeldenummer: 11700723.7
(22) Anmeldetag: 10.01.2011
(51) Int. Cl.: G02B 6/44

(54) **ANSCHLUSS-BOX FÜR GLASFASERKABEL**
CONNECTION BOX FOR GLASS FIBER CABLES
BOÎTIER DE RACCORDEMENT POUR CÂBLE À FIBRE OPTIQUE

(30) Priorität: 05.03.2010 DE 102010010428
(43) Veröffentlichungstag der Anmeldung: 09.01.2013
(73) Patentinhaber: CommScope Technologies LLC, Hickory, NC 28602 (US)
(72) Erfinder: KOPF, Pia, 14052 Berlin (DE); HETZER, Ulrich, 15831 Mahlow (DE); FISCHER, Thomas, 04519 Rachwitz / Zschortau (DE)
(74) Vertreter: Zucker, Volker
(86) Internationale Anmeldenummer: PCT/EP2011/000059
(87) Internationale Veröffentlichungsnummer: WO 2011/107181

(56) Entgegenhaltungen:
- EP-A1- 2 116 881
- WO-A1-00/65397
- DE-A1-102008 010 592
- DE-A1-102008 027 381
- DE-U1-202007 005 870
- US-A- 5 724 467
- US-A1- 2005 135 768
- US-A1- 2009 258 534
- US-A1- 2009 269 019
- US-B1- 6 275 641

## Beschreibung

Die Erfindung betrifft eine Anschluss-Box für Glasfaserkabel, umfassend ein mindestens zweiteiliges Gehäuse mit einem Unterteil und einem Deckel, wobei innerhalb des Gehäuses mindestens eine Aufnahme für eine Kupplung zur Aufnahme von Glasfasersteckern angeordnet ist.

Aus der DE 10 2008 027 381 A1 ist eine gattungsgemäße Anschluss-Box für Glasfaserkabel bekannt, umfassend ein mindestens zweiteiliges Gehäuse mit einem Unterteil und einem Deckel, wobei der Deckel schwenkbar an dem Unterteil angeordnet ist, mindestens eine Aufnahme für einen Spleiß, mindestens eine Zuführung für ein Glasfaserkabel und eine Aufnahme für eine Kupplung, wobei die Seitenflächen des Deckels länger als die Stirnflächen des Deckels sind, wobei ein Schwenklager des Deckels an einer Stirnfläche des Deckels ist. Die Aufnahme für die Kupplung ist derart zu einer Stirnfläche des Unterteils bzw. Deckels angeordnet, dass die eingesetzte Kupplung nahezu mit der Stirnfläche abschließt, so dass auch bei geschlossenem Deckel von außerhalb der Anschluss-Box ein Glasfaserstecker in die eine Seite der Kupplung gesteckt bzw. gezogen werden kann.

Aus der DE 10 2008 010 592 A1 ist ein Glasfaser-Anschlussmodul bekannt, umfassend ein Gehäuse zur Aufnahme von Glasfaser-Anschlussschnittstellen, wobei das Gehäuse mit ersten Befestigungsmitteln ausgebildet ist, um das Glasfaser-Anschlussmodul an Rundstangen zu befestigen. Weiter ist das Gehäuse mit zweiten Befestigungsmitteln ausgebildet, um das Glasfaser-Anschlussmodul an Rundstangen zu befestigen, wobei die zweiten Befestigungsmittel im Vergleich zu den ersten Befestigungsmitteln zur Rückseite vernetzt angeordnet sind.

Aus der US 2009/0269019 A1 ist eine weitere Anschluss-Box für Glasfaserkabel bekannt.

Aus der DE 20 2007 005 870 U1 ist eine Vorrichtung zur Aufnahme von Steckverbindungen bekannt, insbesondere von Lichtwellenleitersteckverbindungen, mit mindestens zwei Aufnahmeelementen zur Aufnahme von jeweils mehreren Steckverbindungen, wobei benachbarte Aufnahmeelemente derart gelenkig miteinander verbunden sind, dass ein Aufnahmeelement zusammen mit den in demselben aufgenommenen Steckverbindungen gegenüber einem benachbarten Aufnahmeelement und den in demselben aufgenommenen Steckverbindungen derart schwenkbar ist, dass ein Abstand zwischen den Aufnahmeelementen veränderbar ist. Weiter ist ein erstes Aufnahmeelement vorgesehen, welches mehrere in einer Reihe nebeneinander angeordnete Aufnahmepositionen für Steckverbindungen aufweist und mit einer Bodenwand einer Verteilereinrichtung fest verbindbar ist. Weiter ist ein zweites Aufnahmeelement vorgesehen, welches ebenfalls mehrere in einer Reihe nebeneinander angeordnete Aufnahmepositionen für Steckverbinder aufweist. Das zweite Aufnahmeelement ist über Schenkel derart schwenkbar mit dem ersten Aufnahmeelement verbunden, dass das zweite Aufnahmeelement von einer ersten Relativposition, in welcher ein horizontaler Abstand zum ersten Aufnahmeelement maximiert und ein vertikaler Abstand zum ersten Aufnahmeelement minimiert ist, unter Verringerung des horizontalen Abstandes und unter Vergrößerung des vertikalen Abstandes in eine zweite Relativposition schwenkbar ist. Dabei sind zwischen die Aufnahmepositionen jedes Aufnahmeelements schlitzartige Ausnehmungen eingebracht, durch die zu den in dem jeweils anderen Aufnahmeelement aufgenommenen Steckverbindungen führende Kabel leitbar sind.

Es sind Anwendungen möglich, wo aus verschiedenen Gründen ein Herausziehen eines gesteckten Glasfasersteckers nicht ohne weiteres möglich sein soll, beispielsweise aus Sicherheitsgründen aufgrund des austretenden Laserlichts oder um Manipulationen zu verhindern.

Der Erfindung liegt das technische Problem zugrunde, eine flexibel einsetzbare Anschluss-Box zu schaffen, mittels derer einfach eine Bauform realisierbar ist, in der bedarfsweise ein in eine Kupplung gesteckter äußerer Glasfaserstecker gesichert oder ungesichert ist.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst die Anschluss-Box für Glasfaserkabel ein mindestens zweiteiliges Gehäuse mit einem Unterteil und einem Deckel, wobei innerhalb des Gehäuses mindestens eine Aufnahme für eine Kupplung zur Aufnahme von Glasfasersteckern angeordnet ist, wobei die Aufnahme als Doppelrahmen ausgebildet ist, der zwei erste vertikale Holme und zwei zweite vertikale Holme umfasst, wobei die zweiten Holme näher an einer Frontseite des Deckels (im geschlossenen Zustand) und des Unterteils angeordnet sind, wobei die Kupplung wahlweise an den ersten oder den zweiten Holmen verrastbar ist. Hierdurch wird erreicht, dass je nach Verrastung der Kupplung die Seite der Kupplung zum Einstecken des äußeren Glasfasersteckers mit der Frontseite abschließt oder diese in das Innere des Gehäuses zurückversetzt ist. In letzterem Fall sichert dann der heruntergeklappte Deckel den gesteckten Glasfaserstecker gegen ein Herausziehen. Die Aufnahme für Kupplungen kann dabei einstückig bzw. einteilig mit dem Unterteil ausgebildet sein oder aber als separates Bauteil mit dem Unterteil verbunden sein. Vorzugsweise ist die Aufnahme als Doppel-Aufnahme für zwei Kupplungen ausgebildet.

Die Erfindung wird nachfolgend anhand eines bevorzugten Ausführungsbeispiels näher erläutert. Die Fig. zeigen:
- Fig. 1: eine perspektivische Vorderansicht des Deckels mit LED-Umlenkelement,
- Fig. 2: eine perspektivische Vorderansicht der Anschluss-Box mit aufgeschwenktem Deckel,
- Fig. 3: eine perspektivische Vorderansicht der Anschluss-Box mit aufgeschwenktem Träger,
- Fig. 4: eine perspektivische Darstellung einer Standard-Kupplung (Stand der Technik),
- Fig. 5: eine erste perspektivische Darstellung einer als Doppelrahmen ausgebildeten Aufnahme für Kupplungen,
- Fig. 6: eine zweite perspektivische Darstellung des Doppelrahmens,
- Fig. 7: eine erste Darstellung mit in den Doppelrahmen eingesteckten Kupplungen,
- Fig. 8: eine zweite Darstellung mit in den Doppelrahmen eingesteckten Kupplungen,
- Fig. 9a: eine perspektivische Darstellung mit einem Cat-TV-Modul,
- Fig. 9b: eine perspektivische Darstellung mit einem elektrischen Steckverbinder,
- Fig. 9c: eine perspektivische Darstellung mit einer weiteren Aufnahme für Kupplungen,
- Fig. 10a: eine perspektivische Darstellung des Trägers mit einer weiteren Aufnahme für Spleiße,
- Fig. 10b: eine perspektivische Darstellung des Trägers mit einer Kupplung für Glasfaserstecker,
- Fig. 11: eine perspektivische Darstellung eines optischen Umlenkelements,
- Fig. 12: eine Detaildarstellung der Führung von Drop-Kabeln im Schwenklager und
- Fig. 13: eine Detaildarstellung der Führung von Adern im Schwenklager.

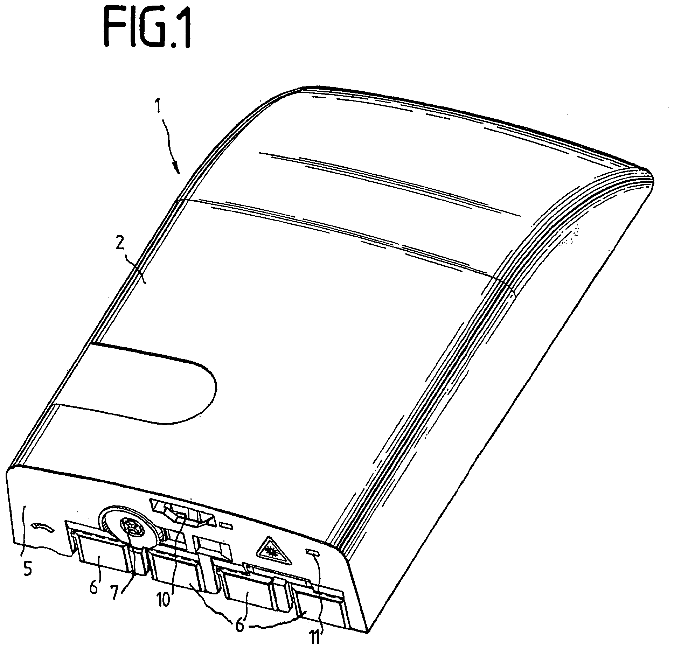

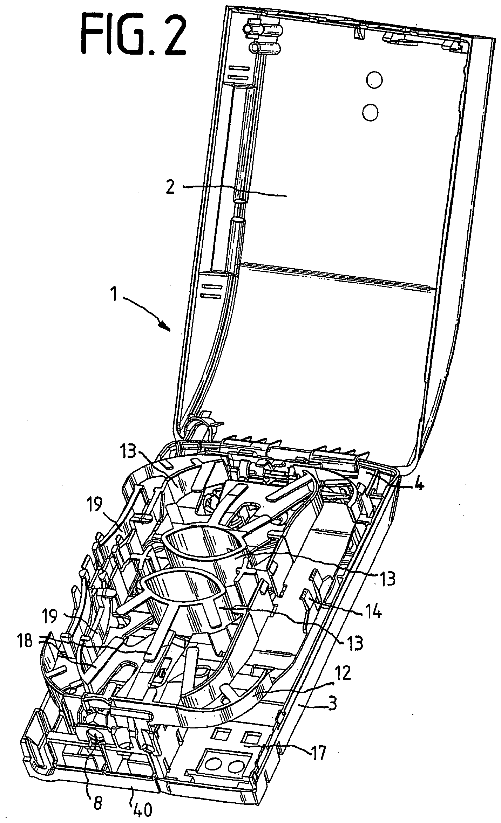

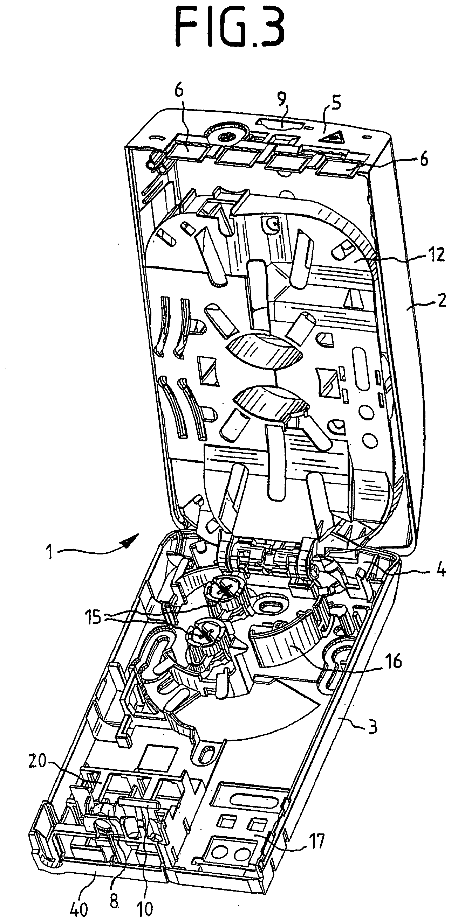

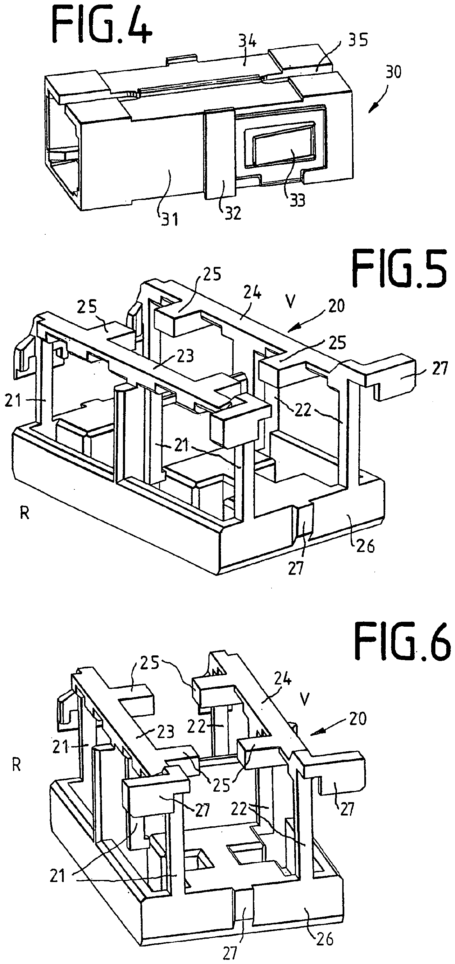

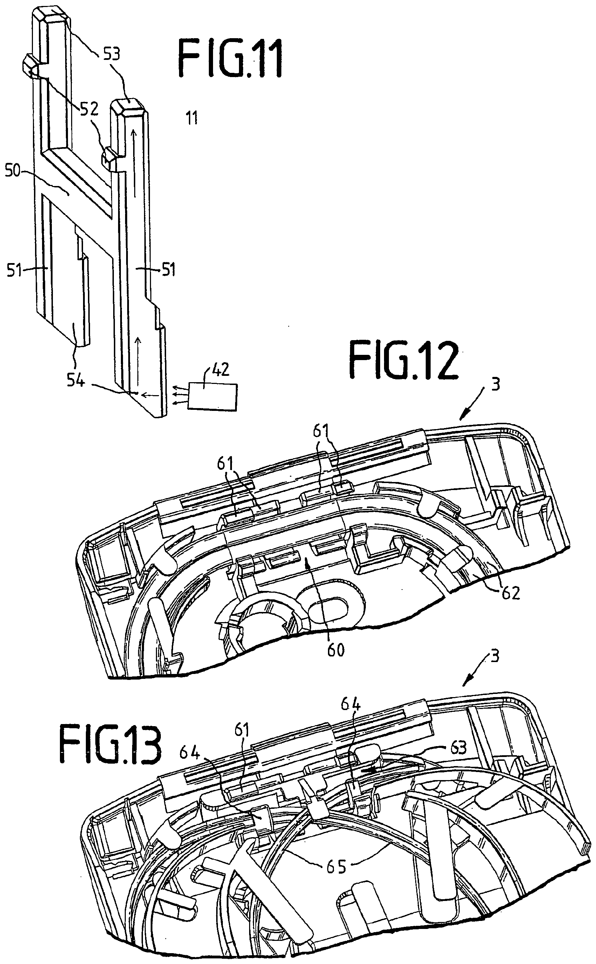

Die in den Fig. 1 bis 3 dargestellte Anschluss-Box 1 umfasst einen Deckel 2 und ein Unterteil 3. Der Deckel 2 ist dabei schwenkbar an einer hinteren Stirnfläche 4 des Unterteils 3 angelenkt, wobei der Deckel 2 dabei eine oder mehrere Raststellungen aufweisen kann. An einer vorderen Stirnfläche 5 weist der Deckel 2 Laschen 6 auf, die Sollbruchstellen aufweisen und bedarfsweise aus dem Deckel 2 herausgebrochen werden können. Weiter ist in Fig. 1 eine Aufnahme 7 für eine Sicherungsschraube dargestellt, die in ein Gewinde 8 im Unterteil 3 einschraubbar ist. Der Deckel 2 weist eine Öffnung 9 auf, in die im geschlossenen Zustand eine Lasche 10 des Unterteils 3 einrastet. In Fig. 1 ist gestrichelt ein optisches Umlenkelement 11 dargestellt, das in Fig. 11 detailliert dargestellt ist und später noch näher erläutert wird. Weiter umfasst die Anschluss-Box 1 einen Träger 12, der schwenkbar am Unterteil 3 angelenkt ist, der in Fig. 2 in einer Grundstellung und in Fig. 3 in einer aufgeschwenkten Position dargestellt ist. Auf dem Träger 12 sind verschiedene Faserführungselemente 13 und Niederhalter 18 angeordnet. Weiter umfasst der Träger 12 zwei Aufnahmen 19 für vier Spleiße oder auch Splitter sowie eine Rastaufnahme 14, in die verschiedene Elemente einrastbar sind, was später noch näher erläutert wird. Das Unterteil 3 weist zwei Zugentlastungen 15 sowie Elmente 16 zur Faser- bzw. Kabelführung auf. Weiter weist das Unterteil 3 eine Aufnahme 20 für Kupplungen 30 (siehe Fig. 4) und eine weitere Rastaufnahme 17 auf.

Die Aufnahme 20 für Kupplungen 30 wird anhand der Fig. 4-8 nun näher erläutert. Dabei ist in Fig. 4 eine Standard-Kupplung für SC-Stecker dargestellt. Die Kupplung 30 ist im Wesentlichen quaderförmig ausgebildet, wobei jeweils an den Seitenflächen 31 eine Anschlagkante 32 und eine Federlasche 33 angeordnet sind. Weiter weist die Kupplung 30 auf der Oberseite 34 eine Nut 35 auf. Eine derartige Kupplung 30 ist Stand der Technik und soll daher hier nicht weiter beschrieben werden. Dabei sei nur angemerkt, dass die Kupplung auch als Kupplung für andere Glasfaserstecker als SC-Stecker ausgebildet sein kann. z.B. LC-, E2000-oder LX.5-Stecker.

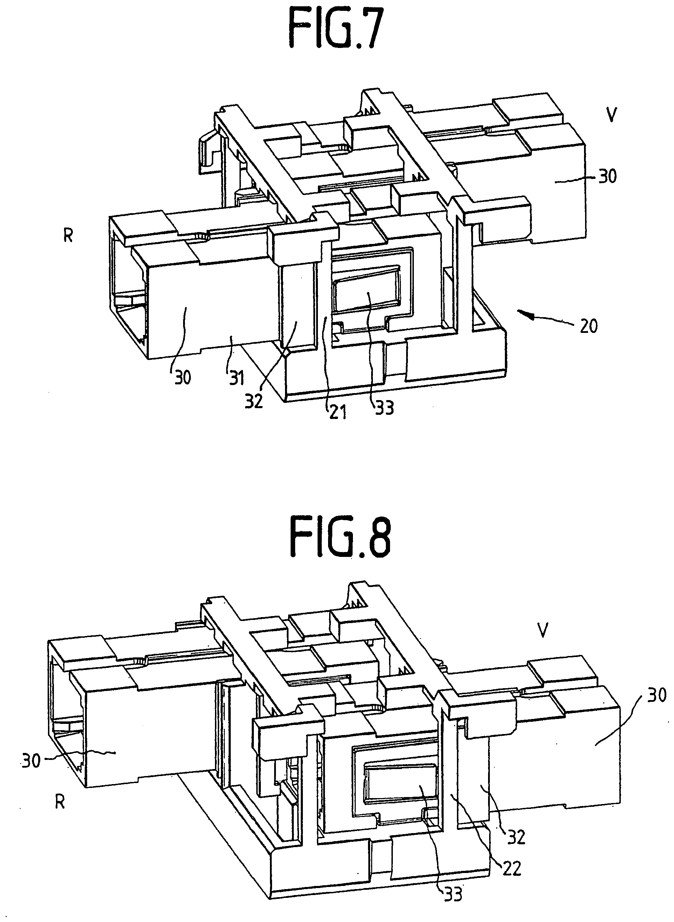

In den Fig. 5 und 6 ist die Aufnahme 20 für Kupplungen 30 ohne Kupplungen und in den Fig. 7 und 8 mit eingesteckten Kupplungen 30 dargestellt. Die Aufnahme 20 ist als Doppel-Aufnahme ausgebildet, d.h. diese kann zwei Kupplungen 30 aufnehmen. Die Aufnahme 20 umfasst zweimal zwei erste vertikale Holme 21 und zwei zweite vertikale Holme 22, wobei die Holme 21 und die Holme 22 jeweils über gemeinsame obere Querstreben 23, 24 miteinander verbunden sind. Die Querstreben 23, 24 weisen dabei jeweils senkrecht abstehende Stege 25 auf, wobei die Stege 25 zueinander fluchtend ausgerichtet sind. An der Unterseite sind alle Holme 21, 22 über ein gemeinsames Basisteil 26 miteinander verbunden. Die Aufnahme 20 ist dabei vorzugsweise als einteiliges Spritzgussteil ausgebildet. An den jeweils äußeren Holmen 21, 22 sind Rastelemente 27 angeordnet, mittels derer die Aufnahme 20 in der Rastaufnahme 17 des Unterteils 3 verrastet werden kann. Ist hingegen die Aufnahme 20 einstückig mit dem Unterteil 3 ausgebildet, so können diese Rastelemente 27 entfallen. Die Aufnahme 20 ist nun derart in das Unterteil 3 eingesetzt, dass die zweiten Holme 22 dichter an einer vorderen Stirnfläche 40 des Unterteils 3 angeordnet sind. Dabei wird die Seite der zweiten Holme 22 als Vorderseite V und die Seite der ersten Holme als Rückseite R bezeichnet.

Eine Kupplung 30 kann von der Vorderseite V oder der Rückseite R in die Aufnahme 20 gesteckt werden. In der Fig. 7 ist dargestellt, dass die vordere Kupplung 30 von der Rückseite R und die hintere Kupplung 30 von der Vorderseite V eingesteckt sind. Beim Einstecken der vorderen Kupplung 30 in die Aufnahme 20 werden die Federlaschen 33 durch die ersten Holme 21 in Richtung Seitenfläche 31 gedrückt. Hinter den ersten Holmen 21 entspannen dann die Federlaschen 33 und die Anschlagkanten 32 schlagen von der Rückseite gegen die ersten Holme 21. Die Kupplung 30 ist verrastet. Analog verrastet die Kupplung 30 mit Federlaschen 33 und Anschlagkanten 32 an den zweiten Holmen 22, wenn die Kupplung von der Vorderseite V in die Aufnahme 20 gesteckt wird (siehe insbesondere Fig. 8). Je nachdem, ob die Kupplung 30 von der Vorderseite V oder der Rückseite R eingesteckt wird, liegt die an der Vorderseite befindliche Öffnung der Kupplung 30 für Glasfaserstecker außerhalb der Aufnahme 20 oder innerhalb der Aufnahme 20.

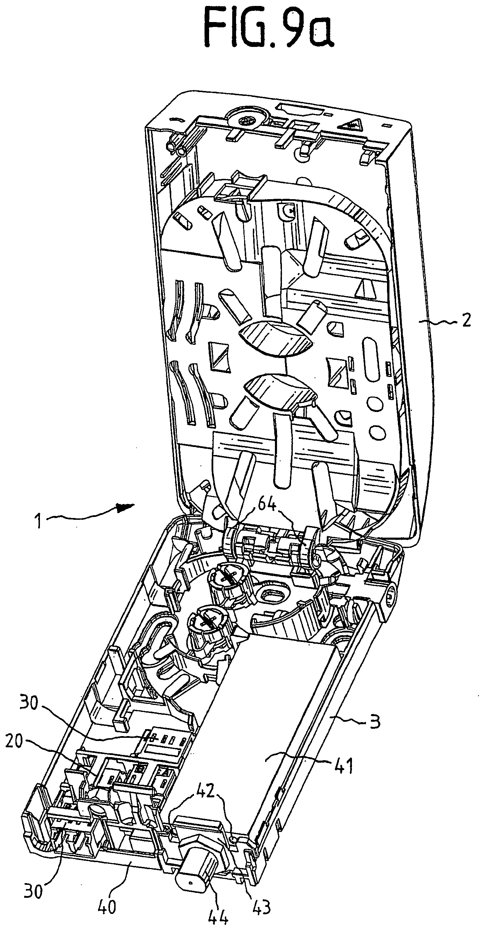

In Fig. 9a ist nun dargestellt, wie sich dies im Zusammenhang mit dem Unterteil 3 bzw. Deckel 2 auswirkt. Die linke Kupplung 30 ist dabei von der Vorderseite V in die Aufnahme 20 eingesetzt und die rechte Kupplung 30 ist von der Rückseite R in die Aufnahme 20 eingesetzt. Dabei schließt der vordere Teil der linken Kupplung 30 mit der vorderen Stirnfläche 40 des Unterteils 3 ab, wohingegen der vordere Teil der rechten Kupplung 30 in der Aufnahme 20 liegt. Werden nun Glasfaserstecker jeweils in die vorderen Teile der Kupplungen 30 gesteckt und der Deckel 2 geschlossen, so kann der Glasfaserstecker in der linken Kupplung 30 noch gezogen werden, da dieser sich noch weitgehend außerhalb der Anschluss-Box 1 befindet. In der rechten Kupplung 30 kann der Glasfaserstecker hingegen nicht gezogen werden, da der Glasfaserstecker vollständig in der Anschluss-Box 1 liegt und somit durch den Deckel 2 gegen ein Herausziehen gesichert ist.

In der Fig. 9a ist weiter dargestellt, dass ein Cat-TV-Modul 41 mit LEDs 42 in die Rastaufnahme 17 des Unterteils 3 eingerastet ist. Dabei ist an der vorderen Stirnfläche 40 eine auf das Cat-TV-Modul 41 angepasste Blende 43 angeordnet, durch die ein vom Cat-TV-Modul 41 abgehendes Kabel geführt ist.

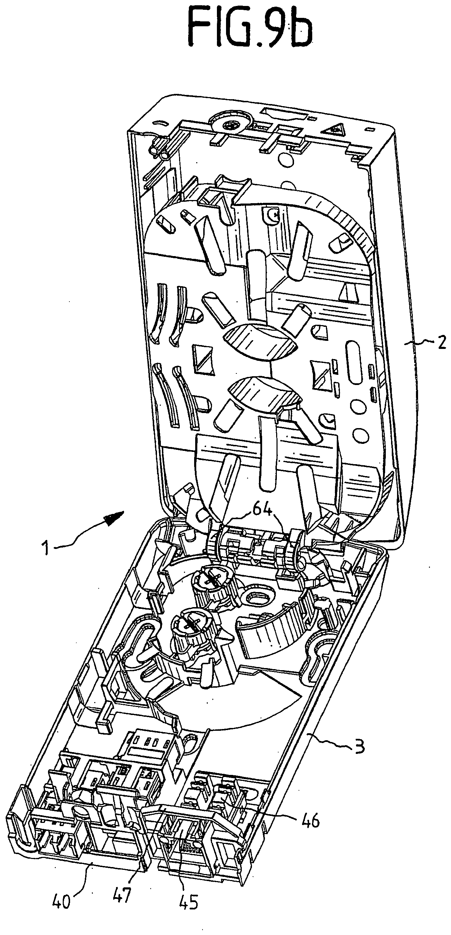

In der Fig. 9b ist eine alternative Bestückung der Rastaufnahme 17 des Unterteils 3 dargestellt, wobei in die Rastaufnahme 17 ein RJ-Steckverbinder 45 mit nachgeordneten Schneid-Klemm-Kontaktleisten 46 eingerastet ist. Dabei sind die Scheid-Klemm-Kontakte der Kontaktleisten 46 mit Feder-Kontakten des RJ-Steckverbinders 45 elektrisch verbunden. Auch für den RJ-Steckverbinder 45 ist eine angepasste Blende 47 an der vorderen Stirnfläche 40 des Unterteils 3 angeordnet.

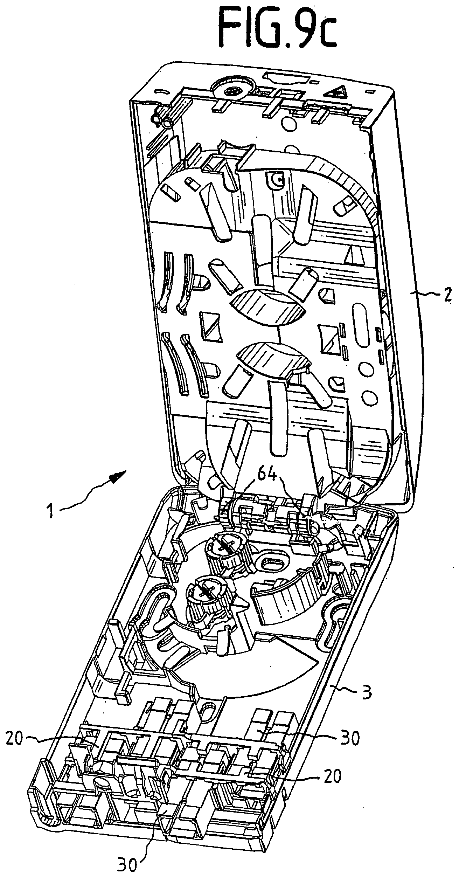

In der Fig. 9c ist eine weitere alternative Bestückung der Rastaufnahme 17 des Unterteils 3 dargestellt, wobei in die Rastaufnahme 17 eine Aufnahme 20 für Kupplungen 30 eingerastet ist. Dabei ist wie bei der benachbarten Aufnahme die linke Kupplung 30 von der Vorderseite V und die rechte Kupplung 30 von der Rückseite R eingesteckt.

Durch die Rastaufnahme 17 kann also die Anschluss-Box 1 flexibel an die verschiedensten Anwendungen einfach angepasst werden.

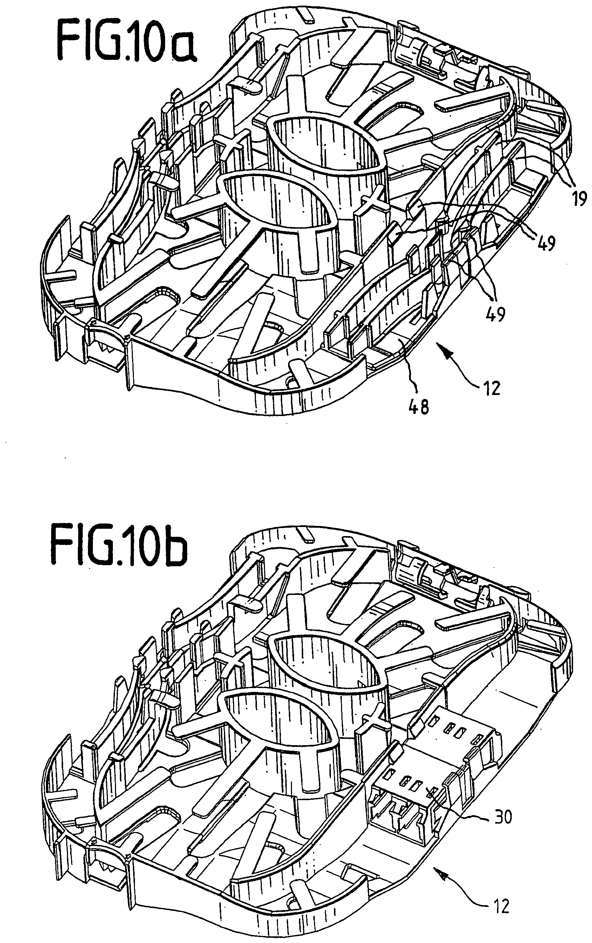

In den Fig. 10a und 10b ist dargestellt, wie der Träger 12 durch entsprechende Bestückung der Rastaufnahme 14 flexibel angepasst werden kann. Dabei ist in Fig. 10a ein Träger 48 mit zwei Aufnahmen 19 für vier Spleiße eingerastet. Dabei rasten Rastnasen 49 der Rastaufnahme 14 über Wandelemente der Aufnahmen 19, so dass diese im Unterteil 3 fixiert sind. In der Fig. 10b ist dargestellt, dass alternativ eine Kupplung 30 für Glasfaserstecker in die Rastaufnahme 14 eingerastet ist.

Anhand der Fig. 11 wird nun das optische Umlenkelement 11 näher erläutert. Das Umlenkelement 11 weist im Wesentlichen eine H-Form auf. Dabei dient der Quersteg 50 ausschließlich der Verbindung der beiden vertikalen Holme 51. An der Vorderseite unterhalb des Querstegs 50 sind an den vertikalen Holmen 51 Rastnasen 52 angeordnet. Die Rastnasen 52 dienen zur Befestigung des Umlenkelements 11 am Deckel 2. In diesem Zustand liegen die LEDs 42 des Cat-TV-Moduls 41 an der Rückseite der vertikalen Holme 51 unterhalb des Quersteges 50 an. An der Vorderseite der Holme 51 sind Reflexionsflächen 54 angeordnet. Die Oberseiten 53 des Umlenkelements 11 bilden dabei den optischen Ausgang des Umlenkelements. Wird nun Licht von den LEDs 42 emittiert, so koppelt dies von der Rückseite des Umlenkelements 11 ein, trifft auf die Reflexionsflächen 54, wird nach oben reflektiert und tritt durch die Oberseiten 53 aus.

In der Fig. 12 ist das Unterteil 3 in einer Detailansicht dargestellt, wobei der Träger 12 entfernt ist. Dabei ist ein Schwenklager 60 dargestellt, dass sich aus mehreren Elementen 61 mit radialen Außenflächen zusammensetzt. Die Elemente 61 weisen dabei eine offene Kontur auf, in der Drop-Kabel 62 geführt sind. Drop-Kabel sind Glasfaserkabel mit 3 mm Durchmesser und einem Glasfaserstecker. Das eingeführte Drop-Kabel kann dann von der vorderen Stirnseite der Anschluss-Box eingeführt werden, über das Schwenklager 60 umgelenkt und in einer Kupplung in der Rastaufnahme 17 abgeschlossen werden.

In der Fig. 13 ist dargestellt, wie Adern 65 in dem Schwenklager 60 und in dem Träger 12 geführt werden, wo diese dann beispielsweise zum Spleißen zu den Aufnahmen 19 für Spleiße geführt werden. Dabei umfasst der Träger 12 ein Gegenlager 63, das auf dem Schwenklager 60 drehen kann, wobei das Schwenklager 60 starr ist. Das Gegenlager 63 umfasst dabei zwei bogenförmige Elemente 64, die besonders gut in den Fig. 9a bis 9c zu erkennen sind. Aufgrund der Tatsache, dass die Adern 65 im Schwenklager 60 geführt sind, werden diese bei einer Schwenkbewegung des Trägers 12 nur minimal bewegt.

### Bezugszeichenliste

- 1: Anschluss-Box
- 2: Deckel
- 3: Unterteil
- 4: hintere Stirnfläche
- 5: vordere Stirnfläche
- 6: Laschen
- 7: Aufnahme
- 8: Gewinde
- 9: Öffnung
- 10: Lasche
- 11: Umlenkelement
- 12: Träger
- 13: Faserführungselement
- 14: Rastaufnahme
- 15: Zugentlastung
- 16: Elemente
- 17: Rastaufnahme
- 18: Niederhalter
- 19: Aufnahmen
- 20: Aufnahme
- 21: erste vertikale Holme
- 22: zweite vertikale Holme
- 23: Querstreben
- 24: Querstreben
- 25: Stege
- 26: Basisteil
- 27: Rastelemente
- 30: Kupplung
- 31: Seitenfläche
- 32: Anschlagkante
- 33: Federlasche
- 34: Oberseite
- 35: Nut
- 40: Stirnfläche
- 41: Cat-TV-Modul
- 42: LEDs
- 43: Blende
- 44: Kabel
- 45: RJ-Steckverbinder
- 46: Schneid-Klemm-Kontaktleisten
- 47: Blende
- 48: Träger
- 49: Rastnasen
- 50: Quersteg
- 51: vertikaler Holm
- 52: Rastnasen
- 53: Oberseite
- 54: Reflexionsflächen
- 60: Schwenklager
- 61: Elemente
- 62: Drop-Kabel
- 63: Gegenlager
- 64: bogenförmiges Element
- 65: Adern (mit Glasfasern)
- R: Rückseite
- V: Vorderseite

## Patentansprüche

1. Anschluss-Box (1) für Glasfaserkabel, umfassend ein mindestens zweiteiliges Gehäuse mit einem Unterteil (3) und einem Deckel (2), wobei innerhalb des Gehäuses mindestens eine Aufnahme (20) für eine Kupplung (30) zur Aufnahme von Glasfasersteckern angeordnet ist, sowie mindestens eine Kupplung (30),
**dadurch gekennzeichnet, dass**
die Aufnahme (20) als Doppelrahmen ausgebildet ist, der zwei erste vertikale Holme (21) und zwei zweite vertikale Holme (22) umfasst, wobei die ersten und zweiten Holme (21, 22) vertikal zum Unterteil (3) ausgerichtet sind, wobei die zweiten Holme (22) im Verhältnis zu den ersten Holmen (21) näher an einer Frontseite (5, 40) des Deckels (2) und des Unterteils (3) angeordnet sind, wobei die Kupplung (30) wahlweise an den ersten oder den zweiten Holmen (21, 22) verrastbar ist, wobei die Seite der zweiten Holme (22) eine Vorderseite (V) und die Seite der ersten Holme (21) eine Rückseite (R) bezeichnet, wobei die Aufnahme (20) derart zur Frontseite (5, 40) angeordnet und die Kupplung (30) derart ausgebildet ist, dass eine von der Vorderseite (V) eingesteckte Kupplung (30), die an den zweiten Holmen (22) einrastet, mit dessen vorderem zur Frontseite (5, 40) hinweisendem Teil mit der vorderen Stirnfläche (40) des Unterteils (3) abschließt und eine von der Rückseite (R) der Aufnahme (20) eingesteckte Kupplung (30), die an dem ersten Holm (21) einrastet, mit dessen vorderen zur Frontseite (5, 40) hinweisenden Teil innerhalb der Aufnahme (20) liegt, sodass ein in den vorderen Teil einer von der Vorderseite (V) eingesteckten Kupplung (30) eingesteckter Glasfaserstecker auch bei geschlossenem Deckel (2) noch gezogen werden kann und ein in dem vorderen Teil einer von der Rückseite (R) eingesteckten Kupplung (30) eingesteckter Glasfaserstecker vollständig in der Anschluss-Box (1) liegt.

2. Anschluss-Box nach Anspruch 1, **dadurch gekennzeichnet, dass** die Aufnahme (20) als Doppel-Aufnahme für zwei Kupplungen (30) ausgebildet ist, die zweimal zwei erste vertikale Holme (21) und zwei zweite vertikale Holme (22) umfasst, wobei die ersten vertikalen Holmen (21) über eine gemeinsame Querstrebe (23) verbunden sind, und die zweiten vertikalen Holme (22) über eine gemeinsame Querstrebe (24) untereinander verbunden sind.

3. Anschluss-Box nach Anspruch 2, **dadurch gekennzeichnet, dass** an einer Unterseite alle ersten und zweiten vertikalen Holme (21, 22) über ein gemeinsames Basisteil (26) miteinander verbunden sind.

4. Anschluss-Box nach Anspruch 3, **dadurch gekennzeichnet, dass** an den jeweils äußeren ersten und zweiten vertikalen Holmen (21, 22) Rastelemente (27) angeordnet sind.

5. Anschluss-Box nach einem der vorangegangenen Ansprüche, **dadurch gekennzeichnet, dass** die Aufnahme (20) als ein einteiliges Spritzgussteil ausgebildet ist.

## Claims

1. A connecting box (1) for glass fiber cables, comprising a housing which is formed from at least two parts and has a lower part (3) and a cover (2), with at least one holder (20) for a coupling (30) for holding glass fiber plugs being arranged within the housing, and at least one coupling (30),
**characterized in that**
the holder (20) is in the form of a double frame which comprises two first vertical struts (21) and two second vertical struts (22), wherein the first and second struts (21, 22) are vertically arranged to the lower part (3), with the second struts (22) being arranged closer than the first struts (21) to a front face (5, 40) of the cover (2) and of the lower part (3), and with the coupling (30) optionally being latchable to the first or the second struts (21, 22), wherein the holder is arranged at the front face (5, 40) and the coupling is configured such that a coupling (30), which is inserted from the front face (V) and is latched to the second struts (22), has a front end that is flush with the front end surface (40) of the lower part (3), while a coupling (30) inserted from the rear face (R) and latched to the first struts (21) has a front end located in the holder (20), such that a glass fiber plug inserted in a front part of the coupling (30) which is inserted from the front face (V) can be pulled although the cover (2) is closed wherein a glass fiber plug inserted in a front part of the coupling (30) which is inserted from the rear face (R) is located completely in the connection box (1).

2. The connecting box as claimed in claim 1, wherein the holder (20) is in the form of a double holder for two couplings (30), which comprises two sets of two first vertical struts (21) and two second vertical struts (22), wherein the first vertical struts (21) are connected by a common upper lateral stay (23) and the second vertical struts (22) are connected by a common upper lateral stay (24).

3. The connecting base of claim 2, wherein all the first and second struts (21, 22) are connected to one another on the lower face via a common base part (26).

4. The connecting base of claim 3, wherein latching elements (27) are arranged on each of the outer of the first and second struts (21, 22).

5. The connecting base as claimed in one of the preceding claims, wherein the holder (20) is in the form of an integral injection-molded part.

## Revendications

1. Boîtier de raccordement (1) pour câble à fibre optique, comprenant un boîtier en au moins deux parties avec une partie inférieure (3) et une partie de couvercle (2), dans lequel au moins un logement (20) est disposé à l'intérieur du boîtier pour un couplage (30) destiné à recevoir des connecteurs de fibre optique, ainsi qu'au moins un couplage (30),
**caractérisé en ce que** le logement (20) est réalisé sous forme de double cadre, qui comprend deux premiers montants verticaux (21) et deux deuxièmes montants verticaux (22), dans lequel les premiers et les deuxièmes montants (21, 22) sont orientés verticalement par rapport à la partie inférieure (3), dans lequel les deuxièmes montants (22) sont disposés plus près d'un côté avant (5, 40) du couvercle (2) et de la partie inférieure (3) par rapport aux premiers montants (21), dans lequel le couplage (30) peut être encliqueté au choix sur les premiers ou sur les deuxièmes montants (21, 22), dans lequel le côté des deuxièmes montants (22) désigne un côté avant (V) et le côté des premiers montants (21) désigne un côté arrière (R), dans lequel le logement (20) est disposé vers le côté avant (5, 40) et le couplage (30) est configuré de telle manière qu'un couplage (30) connecté par le côté avant (V), et qui est encliqueté sur les deuxièmes montants (22), se termine avec sa partie avant tournée vers le côté avant (5, 40) à la face frontale avant (40) de la partie inférieure (3) et qu'un couplage (30) connecté par le côté arrière (R) du logement (20), et qui est encliqueté sur le premier montant (21), se situe avec sa partie avant tournée vers le côté avant (5, 40) à l'intérieur du logement (20), de telle manière qu'un connecteur de fibre optique connecté dans la partie avant d'un couplage (30) connecté par le côté avant (V) puisse encore être tiré même avec le couvercle (2) fermé et qu'un connecteur de fibre optique connecté dans la partie avant d'un couplage (30) connecté par le côté arrière (R) soit situé entièrement dans le boîtier de raccordement (1).

2. Boîtier de raccordement selon la revendication 1,
**caractérisé en ce que** le logement (20) est réalisé en forme de double logement pour deux couplages (30), qui comprend deux fois deux premiers montants verticaux (21) et deux deuxièmes montants verticaux (22), dans lequel les premiers montants verticaux (21) sont reliés par une entretoise transversale commune (23), et les deuxièmes montants verticaux (22) sont reliés l'un à l'autre par une entretoise transversale commune (24).

3. Boîtier de raccordement selon la revendication 2,
**caractérisé en ce que** tous les premiers et deuxièmes montants verticaux (21, 22) sont reliés l'un à l'autre à une partie inférieure au moyen d'une pièce de base commune (26).

4. Boîtier de raccordement selon la revendication 3,
**caractérisé en ce que** des éléments d'encliquetage (27) sont disposés sur les premiers et deuxièmes montants verticaux respectivement extérieurs (21, 22).

5. Boîtier de raccordement selon l'une quelconque des revendications précédentes, **caractérisé en ce que** le logement (20) est réalisé sous forme de pièce moulée par injection en une seule pièce.
